# EUROPÄISCHE PATENTANMELDUNG

(11) **EP 1 179 294 A1**
(43) Veröffentlichungstag der Anmeldung: **13.02.2002**
(21) Anmeldenummer: 01115431.7
(22) Anmeldetag: 27.06.2001
(51) Int. Cl.: A01D 89/00, A01F 15/10, A01B 73/00

(54) **Haltevorrichtung eines Rades einer Gutaufnahmevorrichtung**

(30) Priorität: 08.08.2000 DE 10038596
(71) Anmelder: DEERE & COMPANY, Moline, Illinois 61265-8098 (US)
(72) Erfinder: Uros, Raymond, 70100 Gray (FR); Josset, Etienne, 70100 Gray (FR); Paillet, Frédéric, 70100 Gray (FR)
(74) Vertreter: Magin, Ludwig Bernhard

(57) **Zusammenfassung**

2.1. Bekannte Haltevorrichtungen für die Räder einer Gutaufnahmevorrichtung sind mittels eines vertikalen und eines horizontalen Lagers kardanisch aufgehängt, was aufwendig ist.
2.2. Es wird eine Haltevorrichtung (30) vorgeschlagen, die einen Tragarm (32) mit dem Rad (28) in einem Halter (34) axial verschiebbar und schwenkbar aufnimmt, so daß das Rad (28) in einer beliebigen Zahl von Stellungen, einschließlich in einem Freiraum hinter der Gutaufnahmevorrichtung (22) oder seitlich von ihr untergebracht werden kann.
2.3. Haltevorrichtungen (30) für Räder (28) werden an landwirtschaftlichen Erntemaschinen verwendet.

## Beschreibung

Die Erfindung betrifft eine Haltevorrichtung eines Rades einer Gutaufnahmevorrichtung mit einem Tragarm und einem Halter, wobei das Rad gegenüber der Gutaufnahmevorrichtung in verschiedene Stellungen bringbar ist.

Die FR-A1-2 766 322 offenbart eine Erntegutaufnahmevorrichtung mit Stützrädern, die jeweils mittels eines Tragarms an einer Seitenwand angebracht sind. Der Tragarm ist mittels eines vertikalen und eines horizontalen Lagers gehalten und kann sowohl vertikal wie auch horizontal derart geschwenkt werden, daß das Stützrad in einen Freiraum hinter der Erntegutaufnahmevorrichtung schwenkbar ist, um deren Transportbreite zu reduzieren.

Die WO-A1-98/17096 lehrt den Anschluß eines Stützrades an jeder Seite einer sog. Pick-Up mittels eines Tragarms, der in der Form eines auf dem Kopf stehenden "U" ausgebildet ist. Die Größe, Form und Anordnung des Tragarms ist so gewählt, daß zwischen dem Rad und der Pick-Up ein großer Freiraum besteht, der verhindert, daß sich Erntegut dort festsetzt.

Das der Erfindung zugrunde liegende Problem wird darin gesehen, daß in dem ersten Fall ein zu großer technischer Aufwand erforderlich und in dem zweiten Fall eine Verschmälerung der Transportbreite nicht möglich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Tragarm eine Vielzahl von horizontalen und vertikalen Stellungen gegenüber der Gutaufnahmevorrichtung einnehmen, wobei teuere Lager nicht erforderlich sind. So kann anders als beim Stand der Technik der Tragarm nicht nur auf einem vorgegebenen Radius geschwenkt, sondern mehr oder weniger nahe an die Gutaufnahmevorrichtung bzw. in verschiedene Höhen gebracht werden.

Sicherungsmittel können in unterschiedlicher Weise ausgebildet werden; eine formschlüssige Ausbildung hat den Vorteil, daß sie dem rauhen Betrieb in der Landwirtschaft standhält und leicht lösbar ist. Ein Formschluß kann auf verschiedene Weise, nämlich mit Laschen, Zapfen, Splinten, Ringen usw. hergestellt werden.

Ein Riegel, also ein formschlüssiges Maschinenelement, ist allgemein verfügbar und daher kostengünstig; er kann auch ohne Werkzeug montiert und demontiert, nämlich rein manuell bedient werden.

Ein Ring kann den Tragarm ganz oder teilweise umgeben und somit in jeder Stellung halten. Mit dem Riegel kann er auf dem Tragarm in verschiedenen Stellungen gesichert werden, wobei die Stellungen die Lage des Tragarms bestimmen.

Wenn der Riegel gegenüber dem Tragarm zwangsgeführt ist, findet eine Bedienungsperson sehr leicht die jeweiligen Arretierungsstellungen. Darüber hinaus kann vermieden werden, daß der Tragarm aus dem Halter gleitet.

Anstatt den Tragarm zu schwenken und zu schieben, bis die gewollte Stellung gefunden ist, kann eine Zwangsführung vorgesehen werden, die z. B. mittels einer Kurvenführung, z. B in der Art eines Gewindes, den Tragarm automatisch zu den jeweiligen Endstellungen bewegt.

Wenn der Halter und/oder der Tragarm einen runden Querschnitt aufweisen, können beide Teile aufeinander schwenken, was vorteilhafter ist, als die Verbindung vollkommen zu lösen und in einer neuen, z. B. um 60 Grad versetzten Stellung neu zu erstellen.

Die Verwendung eines oder mehrerer Anschläge als Schwenksicherung für den Tragarm hat den Vorteil, daß das Rad mit dem Tragarm auch in einem Außerbetriebszustand eine definierte und sichere Transportstellung einnimmt. Die Schwenksicherung kann sich aus einer Ausnehmung durch Anschläge oder dergleichen ergeben.

Der Tragarm kann gegenüber der Aufnahmevorrichtung verschiedene Stellungen einnehmen und trotzdem die Tragkräfte aufnehmen, wenn zwischen dem Tragarm und der Gutaufnahmevorrichtung eine Verbindung, z. B. eine Stütze, eine Lasche, eine Kette oder dergl. vorgesehen ist.

Die Gesamtbreite einer breiten Gutaufnahmevorrichtung kann auf eine für den Transport auf der Straße zulässige Breite reduziert werden, wenn das Rad aus einer Stellung seitlich der Gutaufnahmevorrichtung in eine Stellung hinter oder über ihr gebracht werden kann und sich dabei hinter eine Seitenkante der Gutaufnahmevorrichtung zurückzieht.

In der Zeichnung ist ein nachfolgend näher beschriebenes Ausführungsbeispiel der Erfindung dargestellt. Es zeigt:
- Fig. 1: eine Rundballenpresse mit einer Gutaufnahmevorrichtung und einer erfindungsgemäßen Haltevorrichtung,
- Fig. 2: die Haltevorrichtung in einer Explosivdarstellung,
- Fig. 3: die Haltevorrichtung aus Figur 3 in einem vertikalen Längsschnitt, und
- Fig. 4: einen Schnitt durch die Haltevorrichtung nach Figur 3 entlang der Linie 4-4 und in der Blickrichtung der dazugehörigen Pfeile.

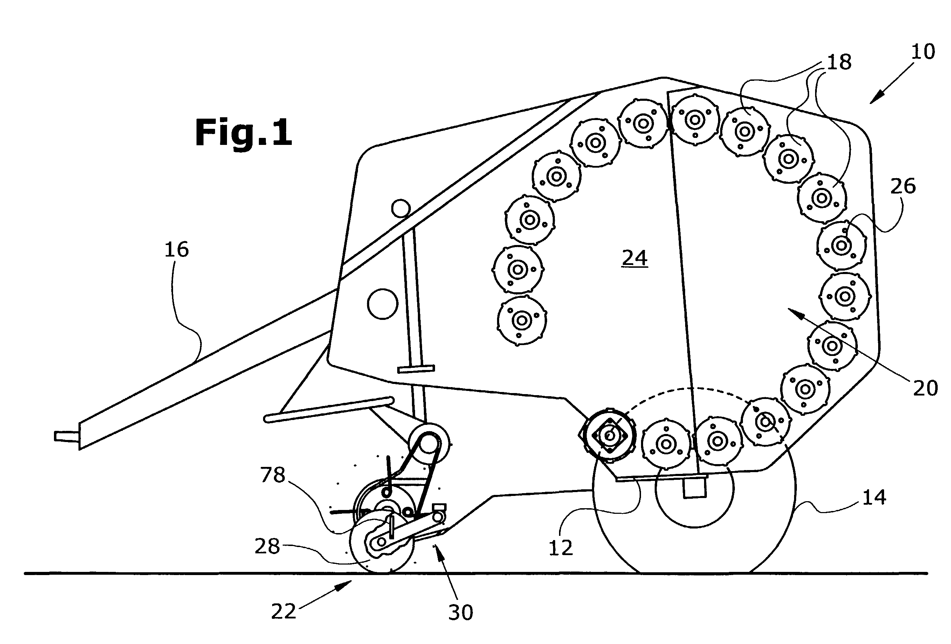

Figur 1 zeigt eine Rundballenpresse 10 mit einem Rahmen 12, der sich über Tragräder 14 auf dem Boden abstützt und mittels einer Deichsel 16 an ein Zugfahrzeug anschließbar ist. Preßrollen 18 umgeben einen Preßraum 20, in dem Preßgut zu einem Ballen verdichtet werden kann, das von einer Gutaufnahmevorrichtung 22 vom Boden aufgenommen wird. Der Preßraum 20 erstreckt sich durch einen vorderen und festen Gehäuseteil 24 und einen rückwärtigen Gehäuseteil 26, der zum Auswerfen des Rundballens anhebbar ist. An jeder Seite der Gutaufnahmevorrichtung 22 befindet sich ein Rad 28, mit dem die Gutaufnahmevorrichtung 22 in einer bestimmten Höhe über den Boden geführt wird, und das mittels einer erfindungsgemäßen Haltevorrichtung 30 an der Gutaufnahmevorrichtung 22 gehalten wird.

Die soweit beschriebene Rundballenpresse 10 entspricht einer herkömmlichen Bauweise; allerdings ist die Verwendung der erfindungsgemäßen Haltevorrichtung 30 weder auf eine Rundballenpresse der dargestellten Art noch auf eine Rundballenpresse überhaupt beschränkt. Vielmehr kommen auch andere Geräte, z. B. eine andere Presse, ein Ladewagen, ein Feldhäcksler, Mähdrescher und dergl. in Frage. Die Gutaufnahmevorrichtung 22 kann sowohl eine Pick-Up als auch ein Schneidwerk, ein Maisgebiß oder dergleichen sein.

Die Haltevorrichtung 30 enthält einen Tragarm 32, einen Halter 34 und Sicherungsmittel 36.

Der Tragarm 32 enthält einen ersten und einen zweiten Schenkel 38 und 40.

Der erste Schenkel 38 ist als ein Rohr mit rechteckigem Querschnitt ausgebildet, das an einem Ende das Rad 28 drehbar trägt und an dem gegenüberliegenden Ende mit dem zweiten Schenkel 40 starr verbunden ist. Im wesentlichen erstreckt sich der erste Schenkel 38 vertikal und schwenkt in einer vertikalen Ebene.

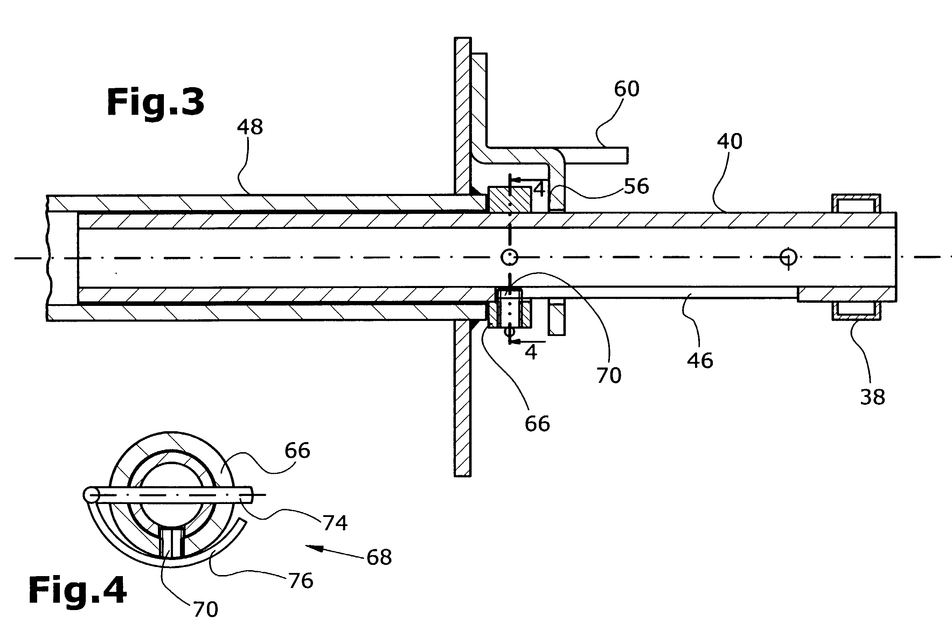

Der zweite Schenkel 40 ist ein Rohr oder Stab mit rundem Querschnitt, der von einer ersten inneren Bohrung 42 und einer zweiten äußeren Bohrung 44 durchdrungen ist, die die gleiche diametrale Ausrichtung aufweisen. Die Bohrungen 42 und 44 weisen einen Abstand zueinander auf, der dem Verstellweg des Rades 28 quer zur Fahrtrichtung der Rundballenpresse 10 entspricht. Es ist auch möglich, noch eine oder mehrere weitere Bohrungen vorzusehen. An der Unterseite - sh. Figur 3 - des zweiten Schenkels 40 befindet sich ein axial verlaufender Schlitz 46, der jedoch vor den jeweiligen Enden des zweiten Schenkels 40 endet. Der zweite Schenkel 40 erstreckt sich wesentlich über die innere Bohrung 42 hinaus.

Der Halter 34 enthält ein Rohr 48, das sich in oder durch eine gegebenenfalls gegenüber der Außenkante zurückgesetzte Seitenwand der Gutaufnahmevorrichtung 22 erstreckt und dort befestigt ist. Die Längsmittenachse verläuft horizontal und quer zur Fahrtrichtung und definiert die Schwenkachse des Tragarms 32. Der Innenquerschnitt ist rund und so bemessen, daß der zweite Schenkel 40 mit relativ wenig Spiel drehbar und verschiebbar aufgenommen werden kann. Es findet je nach der Stellung des Tragarms 38 eine mehr oder weniger große Überlappung des zweiten Schenkels 40 mit dem Rohr 48 statt.

Die Sicherungsmittel 36 enthalten ein erstes Formschlußelement 50, das eine Platte 52, einen Steg 54, eine Nase 56, eine Ausnehmung 58 und Anschläge 60 aufweist.

Das Formschlußelement 50 ist aus einem stabilen Blech geformt und in einer Einheit ausgebildet, die entweder an einer Seitenwand der Gutaufnahmevorrichtung 22 oder dem Rohr 48 angebracht ist, oder Teil der Gutaufnahmevorrichtung 22 ist.

Die Platte 52 liegt in diesem Ausführungsbeispiel an der Seitenwand der Gutaufnahmevorrichtung 22 an und verläuft in dem vorliegenden Ausführungsbeispiel vertikal.

Der Steg 54 verläuft mittig zwischen und senkrecht zu der Platte 52 und der Nase 56 und sorgt für einen Abstand der Nase 56 zu dem Ende des Rohrs 48. An dem der Platte 52 gegenüberliegenden Endbereich des Stegs 54 ist die Ausnehmung 58 vorgesehen.

Die Nase 56 enthält eine Bohrung 62, die mit dem Innenraum des Rohrs 48 fluchtet und die gleiche Größe aufweist. Der Abstand von der Nase 56 zu dem Ende des Rohrs 48 reicht aus, ein zweites Formschlußelement 64 aufzunehmen. Die Nase 56 besteht z. T. aus dem Materialausschnitt aus der Ausnehmung 58.

Die Ausnehmung 58 ist zu dem ersten Schenkel 38 hin offen und weist einen Querschnitt auf, der es ermöglicht, den ersten Schenkel 38 quer aufzunehmen. Die Ausnehmung 58 wird seitlich von den Anschlägen 60 und an einer Seite von dem Steg 54 begrenzt.

Die Anschläge 60 sind als einfache Blechnasen ausgebildet, die stark genug ausgebildet sind, den Tragarm 32 in einer Transport- oder Außerbetriebsstellung zu halten.

Es könnten auch mehrere Ausnehmungen und Anschläge vorgesehen werden, um den Tragarm 32 in unterschiedlichen Stellungen aufzunehmen.

Das zweite Formschlußelement 64 enthält einen Ring 66, einen Riegel 68 und einen Führungsstift 70.

Der Ring 66 weist einen Innendurchmesser auf, der es ermöglicht, mit relativ wenig Spiel auf dem zweiten Schenkel 40 aufzusitzen und einen Außendurchmesser und eine Breite, die es ermöglichen, ihn zwischen dem zweiten Schenkel 40 und dem ersten Formschlußelement 50 aufzunehmen. Der Ring 66 wird von einer Bohrung 72 diametral durchdrungen, die mit den Bohrungen 42 oder 44 in Deckung gebracht werden kann.

Der Riegel 68 ist als ein handelsüblicher Klappsplint ausgebildet, dessen Bolzen 74 die Bohrung 72 durchdringen kann. Ein Federbügel 76 hat eine halbkreisförmige Form und kann auf die Umfangsfläche aufgelegt werden.

Der Führungsstift 70 erstreckt sich in den Innenraum des Rings 66 und kann in den Schlitz 46 eintreten, um den Ring 66 auf dem zweiten Schenkel 40 zwangszuführen. Vorzugsweise wird der Führungsstift 70 in den Ring 66 eingeschraubt.

Schließlich wird auf eine Verbindung 78 zwischen dem ersten Schenkel 38 und der Gutaufnahmevorrichtung 22 eingegangen. Diese Verbindung 78 verbindet den Tragarm 32 wenigstens in einer Richtung starr mit der Gutaufnahmevorrichtung 22, so daß letztere angehoben wird, wenn das Rad 28 z. B. über einen Stein oder dergleichen rollt.

Nach alledem ergibt sich folgender Aufbau.

Der Ring 66 wird in den Spalt zwischen dem Ende des Rohrs 48 und der Nase 56 eingefügt und in Fluchtung mit der Bohrung 62 gehalten. Anschließend wird der zweite Schenkel 40 durch die Bohrung 62, den Ring 66 und in das Rohr 48 eingeschoben. Dann wird der Führungsstift 70 eingeschraubt oder eingepreßt und der Ring 66 derart ausgerichtet, daß der Führungsstift in den Schlitz 46 eingefügt werden kann. Daraufhin wird der Riegel 68 in der inneren Bohrung 42 gesichert und die Verbindung 78 zwischen der Gutaufnahmevorrichtung 22 und dem Tragarm 32 eingesetzt. In dieser Stellung kann das Rad 28 mit der Gutaufnahmevorrichtung 22 in Betrieb genommen werden.

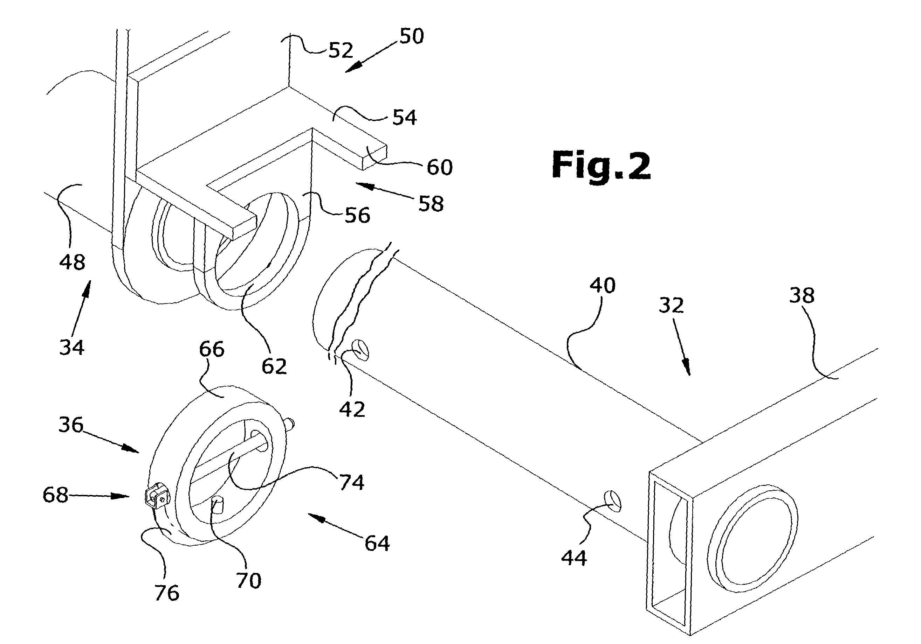

Um das Rad 28 in die Außerbetriebsstellung zu bringen, werden zunächst die Verbindung 78 und der Riegel 68 entfernt, wozu der Federbügel 76 zurückgeschwenkt und der Bolzen 74 aus der inneren Bohrung 42 herausgezogen wird. Anschließend wird der Tragarm 32, bzw. dessen erster Schenkel 38 soweit nach oben geschwenkt, bis sich das Rad 28 hinter der Gutaufnahmevorrichtung 22 befindet. Dann wird der Tragarm 32 nach innen, d. h. mit Blick auf die Figuren 2 und 3 nach links, geschoben, bis der Bolzen 74 in die äußere Bohrung 44 eingesteckt werden kann. Der Ring 66 besitzt dabei bereits die richtige Stellung auf dem Umfang, weil der Führungsstift 70 eine Verdrehung nicht zuläßt. Aufgrund der Schiebebewegung gelangt das Rad 28 hinter die Seitenkante der Gutaufnahmevorrichtung 22. Der erforderliche Verstellweg ist davon abhängig, ob der Halter 34 an oder in einer zurückgesetzten Seitenwand und das Rad 28 an der Außenseite des ersten Schenkels 38 oder der Halter 34 an der Außenwand der Gutaufnahmevorrichtung 22 und das Rad 28 an der Innenseite des ersten Schenkels 38 angebracht ist. In dieser Stellung gelangt der erste Schenkel 38 in die Ausnehmung 58 und liegt an den Anschlägen 60 an, so daß der Tragarm 32 und das Rad 28 auch bei Erschütterungen gehalten wird.

In dem dargestellten Ausführungsbeispiel ist eine Anordnung getroffen, in der sich das Rad 28 in der Außerbetriebsstellung befindet. Wenn das Rad 28 hinter die Gutaufnahmevorrichtung 22 gelangen soll, ist das erste Formschlußelement 50 bzw. dessen Ausnehmung 58 entsprechend verschwenkt anzubringen.

## Patentansprüche

1. Haltevorrichtung (30) eines Rades (28) einer Gutaufnahmevorrichtung (22) mit einem Tragarm (32) und einem Halter (34), wobei das Rad (28) gegenüber der Gutaufnahmevorrichtung (22) in verschiedene Stellungen bringbar ist, **dadurch gekennzeichnet, daß** der Tragarm 32 in dem Halter (34) schwenkbar und verschieblich gelagert und mit Sicherungsmitteln (36) festlegbar ist.

2. Haltevorrichtung nach Anspruch 1, **dadurch gekennzeichnet, daß** die Sicherungsmittel (36) ein erstes und ein zweites miteinander in Eingriff bringbares Formschlußelement (50) und (64) enthalten.

3. Haltevorrichtung nach Anspruch 1 oder 2, **dadurch gekennzeichnet, daß** das zweite Formschlußelement 64 einen Riegel (68) zur lösbaren Verbindung mit dem Tragarm (32) aufweist.

4. Haltevorrichtung nach Anspruch 3, **dadurch gekennzeichnet, daß** das zweite Formschlußmittel (64) einen Ring (66) zur axialen Anlage an dem ersten Formschlußelement (50) aufweist, der mittels des Riegels (68) in verschiedenen Stellungen an dem Tragarm (32) festlegbar ist.

5. Haltevorrichtung nach einem oder mehreren der vorherigen Ansprüche, **dadurch gekennzeichnet, daß** das zweite Formschlußelement (64) mit Bezug auf den Tragarm (32) zwangsgeführt ist.

6. Haltevorrichtung nach einem oder mehreren der vorherigen Ansprüche, **dadurch gekennzeichnet, daß** zwischen dem Tragarm (32) und dem Halter (34) eine Zwangsführung vorgesehen ist.

7. Haltevorrichtung nach einem oder mehreren der vorherigen Ansprüche, **dadurch gekennzeichnet, daß** der Tragarm (32) und/oder der Halter (34) einen runden Querschnitt aufweisen.

8. Haltevorrichtung nach einem oder mehreren der vorherigen Ansprüche, **gekennzeichnet durch** wenigstens einen Anschlag (60) für den Tragarm (32) an der Gutaufnahmevorrichtung (22), insbesondere an dem Halter (34).

9. Gutaufnahmevorrichtung (22) mit einer Haltevorrichtung (30) nach einem oder mehreren der vorherigen Ansprüche, **gekennzeichnet durch** eine Verbindung (78) zwischen dem Tragarm 32 und der Gutaufnahmevorrichtung (22).

10. Gutaufnahmevorrichtung nach Anspruch 9, **dadurch gekennzeichnet, daß** das Rad (28) aus einer seitlich der Gutaufnahmevorrichtung (22) befindlichen Stellung in eine dahinter oder darüber liegende Stellung bringbar ist.
